# EUROPÄISCHE PATENTSCHRIFT

(11) **EP 3 362 245 B1**
(45) Veröffentlichungstag und Bekanntmachung des Hinweises auf die Patenterteilung: **26.08.2020**
(21) Anmeldenummer: 16781283.3
(22) Anmeldetag: 27.09.2016
(51) Int. Cl.: B29C 44/34, B29C 33/02, B29C 44/44, B29C 44/58

(54) **VORRICHTUNG UND VERFAHREN ZUR HERSTELLUNG VON AUS EINEM PARTIKELSCHAUM BESTEHENDEN FORMTEILEN**
DEVICE AND PROCESS FOR PRODUCING MOULDINGS COMPOSED OF A MOULDABLE FOAM
DISPOSITIF ET PROCÉDÉ POUR LA FABRICATION DE PIÈCES MOULÉES CONSTITUÉES PAR UNE MOUSSE PARTICULAIRE

(30) Priorität: 13.10.2015 DE 102015013131
(43) Veröffentlichungstag der Anmeldung: 22.08.2018
(73) Patentinhaber: Krallmann Kunststoffverarbeitung GmbH, 32120 Hiddenhausen (DE)
(72) Erfinder: BREXELER, Ingo, 58300 Wetter / Ruhr (DE)
(74) Vertreter: Lichti - Patentanwälte Partnerschaft mbB
(86) Internationale Anmeldenummer: PCT/EP2016/001602
(87) Internationale Veröffentlichungsnummer: WO 2017/063728

(56) Entgegenhaltungen:
- EP-A2- 0 259 597
- GB-A- 1 563 324
- GB-A- 2 052 358
- JP-A- S5 796 831
- US-A- 3 837 769
- US-A- 4 482 306

## Beschreibung

Die Erfindung betrifft eine Vorrichtung zur Herstellung von aus einem Partikelschaum bestehenden Formteilen, mit mehreren Teilwerkzeugen, die jeweils eine Teilkavität aufweisen, wobei die Teilkavitäten im Zusammenwirken eine Formteilkavität bilden, wobei zumindest eines der Teilwerkzeuge einen Zuführkanal, durch den Kunststoff-Partikel in die Formteilkavität einbringbar sind, und eine Dampfkammer aufweist, aus der ein Heißdampf durch zumindest einen Dampfkanal in die Formteilkavität einbringbar ist.

Darüber hinaus betrifft die Erfindung ein Verfahren zur Herstellung von aus einem Partikelschaum bestehenden Formteilen, wobei die Kunststoff-Partikel in die Formteilkavität eingebracht werden und dort unter Zuführung von Heißdampf aufgeschäumt und/oder versintert werden. Eine gattungsgemäße Vorrichtung sowie ein gattungsgemäßes Verfahren sind aus der US 3,837,769 A bekannt.

Eine Vorrichtung zur Herstellung von Form- oder Bauteilen, die aus einem Partikelschaum bestehen, weist üblicherweise zwei Teilwerkzeuge auf, die jeweils eine Teilkavität besitzen und zusammengefahren und auseinandergefahren werden können. Im zusammengefahrenen Zustand bilden die Teilkavitäten eine Formteilkavität, in die Kunststoffpartikel beispielsweise aus EPP (expandiertes Polypropylen) oder aus EPS (expandiertes Polystyrol) eingebracht werden können. In den Teilwerkzeugen ist jeweils eine Dampfkammer ausgebildet, die von einem oder mehreren Dampferzeugern mit Heißdampf versorgt wird. Aus den Dampfkammern kann der Heißdampf über Dampfdüsen in die Formteilkavität eingebracht werden, was zur Verschweißung oder Versinterung der vorher in die Formteilkavität eingebrachten Schaumpartikel führt.

Der zugeführte Heißdampf erwärmt dabei nicht nur die in der Formteilkavität befindlichen Schaumpartikel auf die für die Verschweißung oder Versinterung notwendige Temperatur (ca. 160°C bei EPP und ca. 120°C bei EPS), sondern erwärmt gleichzeitig auch die Teilwerkzeuge, die Wandung der Formteilkavität und auch die Wandung der Dampfkammer.

Nach erfolgtem Verschweißen oder Versintern der Schaumpartikel in der Formteilkavität werden die Teilwerkzeuge und damit auch die Dampfkammer mit einem Kühlfluid, üblicherweise kaltem Wasser, auf eine Temperatur von ca. 80°C abgekühlt, woraufhin die Teilwerkzeuge auseinandergefahren werden, so dass das Formteil entnommen bzw. entformt werden kann.

Der Vorgang der Erwärmung der Formteilkavität, der Teilwerkzeuge und der Dampfkammer mittels Heißdampf und die anschließende Abkühlung der Formteilkavität, der Teilwerkzeuge und der Dampfkammer mit Kühlwasser läuft üblicherweise periodisch ab. Dies führt zu einem hohen Energie- und Heißdampfbedarf, da bei diesem Vorgehen nicht nur den Kunststoff-Partikeln die notwendige Energie zum Verschweißen oder Versintern über den Heißdampf zugeführt wird, sondern der wesentliche Teil des Heißdampfes erwärmt die umliegenden Bauteile, d.h. die Formteilkavität, die Teilwerkzeuge und die Dampfkammer, die anschließend wieder abgekühlt und daraufhin durch neuen Heißdampf wieder erwärmt werden müssen. Dies führt insgesamt zu einem hohen Energiebedarf, wodurch die bekannten Verfahren sehr kostenintensiv sind.

Der Erfindung liegt die Aufgabe zugrunde, eine Vorrichtung zur Herstellung von aus einem Partikelschaum bestehenden Formteilen zu schaffen, bei der der Energiebedarf deutlich reduziert ist.

Ferner soll ein Verfahren zur Herstellung von aus einem Partikelschaum bestehenden Formteilen geschaffen werden, das sich mit verringertem Energiebedarf schnell und in einfacher Weise ausführen lässt.

Diese Aufgabe wird in vorrichtungstechnischer Hinsicht durch eine Vorrichtung mit den Merkmalen des Anspruchs 1 gelöst. Dabei ist vorgesehen, dass das zumindest eine Teilwerkzeug ein die Teilkavität aufweisendes 1. Werkzeugsegment und ein die Dampfkammer aufweisendes 2. Werkzeugsegment umfasst, wobei das 1. Werkzeugsegment ein 1. Temperiersystem besitzt, mittels dessen das 1. Werkzeugsegment auf eine vorbestimmte Temperatur erwärmbar und/oder kühlbar ist, und wobei das 2. Werkzeugsegment ein 2. Temperiersystem besitzt, mittels dessen das 2. Werkzeugsegment auf eine vorbestimmte Temperatur erwärmbar und/oder kühlbar ist.

Die Erfindung geht von der Grundüberlegung aus, diejenige Energie, die zum Verschweißen, zum Versintern und gegebenenfalls auch zum Aufschäumen der Kunststoff-Partikel in der Formteilkavität notwendig ist, ausschließlich oder zumindest überwiegend in bekannter Weise mittels des Heißdampfes einzubringen, jedoch diejenige Energie, die für das periodische Aufheizen und Abkühlen der Formteilkavität und der Dampfkammer notwendig ist, von dem Energiesystem des Heißdampfes zu trennen. Hierzu wird jedes Teilwerkzeug in mehrere Werkzeugsegmente unterteilt, die separat voneinander temperiert, d.h. erwärmt und/oder gekühlt werden können.

Zur Verfestigung des aus dem Partikelschaum gebildeten Formteils innerhalb der Formteilkavität ist es notwendig, die Wandung der Formteilkavität und somit das Formteil nach dem Verschweißen oder Versintern abzukühlen. Dies geschieht mittels des 1. Temperiersystems, mit dem das 1. Werkzeugsegment, in dem die Teilkavität der Formteilkavität ausgebildet ist, auf eine gewünschte Temperatur erwärmbar und/oder abkühlbar ist. Zusätzlich dazu ist das 2. Werkzeugsegment vorgesehen, das die Dampfkammer umfasst. Die Dampfkammer muss zur Verfestigung des in der Formteilkavität befindlichen Formteils nicht abgekühlt werden, so dass das 2. Temperiersystem des 2. Werkzeugsegment dazu dienen kann, die Dampfkammer und somit das 2. Werkzeugsegment auf einer vorbestimmten Temperatur zu halten. Die Bauteile bzw. Massen, die in jedem Verfahrenszyklus erwärmt und abgekühlt werden müssen, sind auf diese Weise deutlich verringert, wobei zusätzlich die für die Ausbildung des Formteils erforderliche Heißdampfmenge verringert ist, da der Heißdampf im Wesentlichen nur die für das Aufschäumen, Verschweißen oder Versintern der Kunststoff-Partikel notwendige Energie eintragen muss.

In einer bevorzugten Ausgestaltung der Erfindung ist vorgesehen, dass die Vorrichtung aus zumindest zwei Teilwerkzeugen und insbesondere aus genau zwei Teilwerkzeugen besteht, die jeweils das 1. Werkzeugsegment und das 2. Werkzeugsegment genannten Aufbaus besitzen.

In bevorzugter Ausgestaltung der Erfindung kann vorgesehen sein, dass das 1. Werkzeugsegment und das 2. Werkzeugsegment durch eine wärmeisolierende Lage voneinander getrennt und/oder auf Abstand gehalten sind. Die wärmeisolierende Lage zwischen dem 1. Werkzeugsegment und dem 2. Werkzeugsegment stellt sicher, dass der Wärmeübergang zwischen diesen beiden Werkzeugsegmenten verringert ist. Auf diese Weise erreicht werden, dass bei Abkühlung des 1. Werkzeugsegments nicht auch das 2. Werkzeugsegment in unnötiger Weise abgekühlt wird. Zusätzlich oder alternativ zu der wärmeisolierenden Lage zwischen dem 1. Werkzeugsegment und dem 2. Werkzeugsegment kann zwischen diesen beiden Werkzeugsegmenten ein Luftspalt ausgebildet sein, der isolierend wirkt.

Vorzugsweise ist vorgesehen, dass das 1. Temperiersystem des 1. Werkzeugsegments zumindest einen in dem 1. Werkzeugsegment ausgebildeten Fluidkanal aufweist, der von einem Temperierfluid durchströmbar ist. Bei dem Temperierfluid kann es sich um eine Flüssigkeit oder ein Gas handeln. Üblicherweise findet zum Erwärmen heißes Wasser und zum Kühlen kaltes Wasser Verwendung.

In Weiterbildung der Erfindung kann vorgesehen sein, dass das 1. Temperiersystem zumindest einen 1. Temperatursensor aufweist, der mit einer 1. Temperatursteuerung verbunden ist. Auf diese Weise ist ein Regelkreis gebildet, mittels dessen die Temperatur des 1. Werkzeugsegmentes in vorbestimmter Weise eingestellt und überwacht werden kann.

In Weiterbildung der Erfindung kann vorgesehen sein, dass das 2. Temperiersystem des 2. Werkzeugsegmentes zumindest einen in dem 2. Werkzeugsegment ausgebildeten Fluidkanal aufweist, der von einem Temperierfluid durchströmbar ist. Dabei kann das 2. Temperiersystem zumindest einen 2. Temperatursensor aufweisen, der mit einer 2. Temperatursteuerung verbunden ist. Das im 2. Temperiersystem verwendete Temperierfluid ist vorzugsweise ebenfalls heißes bzw. kaltes Wasser, wobei die 2. Temperatursteuerung dafür sorgt, dass die vorgegebene Temperatur des 2. Werkzeugsegmentes eingestellt und überwacht wird.

Die Kunststoff-Partikel werden über einen Zuführkanal der Formteilkavität zugeführt, wobei die Kunststoff-Partikel bereits aufgeschäumt sein können oder erst innerhalb der Formteilkavität aufgeschäumt werden. Vorzugsweise umfasst der Zuführkanal für die Kunststoff-Partikel zumindest einen im 1. Werkzeugsegment ausgebildeten 1. Zuführkanal-Abschnitt und zumindest einen im 2. Werkzeugsegment ausgebildeten 2. Zuführkanalabschnitt.

In verfahrenstechnischer Weise wird die oben genannte Aufgabe durch ein Verfahren mit den Merkmalen des Anspruchs 9 gelöst. Dabei ist vorgesehen, dass das 2. Werkzeugsegment mittels des 2. Temperiersystems auf einer Temperatur gehalten wird, die zumindest der Temperatur des Heißdampfes entspricht, dass das 1. Werkzeugsegment vor der Zuführung des Heißdampfes mittels des 1. Temperiersystems auf eine Temperatur gebracht wird, die zumindest der Temperatur des Heißdampfes entspricht, und dass das 1. Werkzeugsegment nach dem Aufschäumen und/oder der Versinterung der Kunststoff-Partikel in der Formteilkavität mittels des 1. Temperiersystems auf eine Entformungstemperatur abgekühlt wird.

Dabei kann vorgesehen sein, dass das 2. Werkzeugsegment mittels des 2. Temperiersystems auf einer Temperatur gehalten wird, die um maximal 5°C unterhalb der Temperatur des Heißdampfes liegt und vorzugsweise zumindest der Temperatur des Heißdampfes entspricht und besonders bevorzugt um zumindest 3°C und insbesondere um zumindest 5°C oberhalb der Temperatur des Heißdampfes liegt.

Das die Dampfkammer aufweisende 2. Werkzeugsegment wird während des Verfahrens mittels des 2. Temperiersystems vorzugsweise auf eine Dampfkammerwand-Temperatur temperiert, die um ein geringes Maß (3°C bis 5°C) über der Temperatur des Heißdampfes liegt. Diese Temperatur wird während des Verfahrens zumindest annähernd konstant gehalten. Auf diese Weise wird die Kondensation des Heißdampfes beim Eintreten in die Dampfkammer vermieden und dem Heißdampf wird nochmals vor dessen Eintritt in die Formteilkavität Energie zugeführt.

Das 1. Werkzeugsegment, in dem die Teilkavität und somit die Wandung der Formteilkavität gebildet ist, wird mittels des separaten 1. Temperiersystems während des Verfahrenszyklus' wechseltemperiert, d.h. vorzugsweise vor der Zuführung des Heißdampfes wird das 1. Werkzeugsegment mittels des 1. Temperiersystems auf eine Temperatur gebracht, die der Temperatur des Heißdampfes entspricht oder geringfügig oberhalb von dieser liegt. Wenn das 1. Werkzeugsegment das gewünschte Temperaturniveau des Heißdampfes erreicht hat, werden die Kunststoff-Partikel über den Zuführkanal in die Formteilkavität eingefüllt. Nach vollständiger Füllung der Formteilkavität wird der Heißdampf aus dem Dampferzeuger vorzugsweise über isolierte Dampfschläuche in die Dampfkammer und aus dieser über Dampfdüsen in die Formteilkavität eingeleitet. Durch die vorgewärmten und isolierten Werkzeugsegmente kann der Heißdampf an einer Kondensierung gehindert werden und gelangt mit hoher Temperatur in die Formteilkavität, wo er die Kunststoff-Partikel verschweißt, versintert und gegebenenfalls vorher aufschäumt.

Nach erfolgter Verschweißung oder Versinterung der aufgeschäumten Kunststoff-Partikel in der Formteilkavität wird die Zuführung des Heißdampfes unterbrochen und das 1. Werkzeugsegment und damit auch das in der Formteilkavität befindliche Formteil wird mittels des 1. Temperiersystems auf eine Entformungstemperatur von beispielsweise ca. 80°C abgekühlt. Nach Erreichen der Entformungstemperatur wird die Vorrichtung geöffnet und das stabilisierte Formteil kann entnommen werden. Anschließend schließt die Vorrichtung wieder und das genannte Verfahren läuft im vorbeschriebenen Zyklus erneut ab.

Die Vorrichtung zur Herstellung von aus einem Partikelschaum bestehenden Formteilen umfasst zumindest zwei Teilwerkzeuge, von denen zumindest ein Teilwerkzeug und vorzugsweise beide Teilwerkzeuge jeweils das genannte 1. Werkzeugsegment und das genannte 2. Werkzeugsegment aufweisen und mittels des genannten Verfahrens und den entsprechenden Temperiersystemen temperiert werden.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine schematische Darstellung der Vorrichtung zur Herstellung von aus einem Partikelschaum bestehenden Formteilen im geöffneten Zustand,
- Fig. 2: die Vorrichtung gemäß Fig. 1 im geschlossenen Zustand bei Einbringung der Kunststoff-Partikel,
- Fig. 3: die Vorrichtung gemäß Fig. 2 bei Zuführung des Heißdampfes und
- Fig. 4: die Vorrichtung gemäß Fig. 3 mit ausgebildetem Formteil.

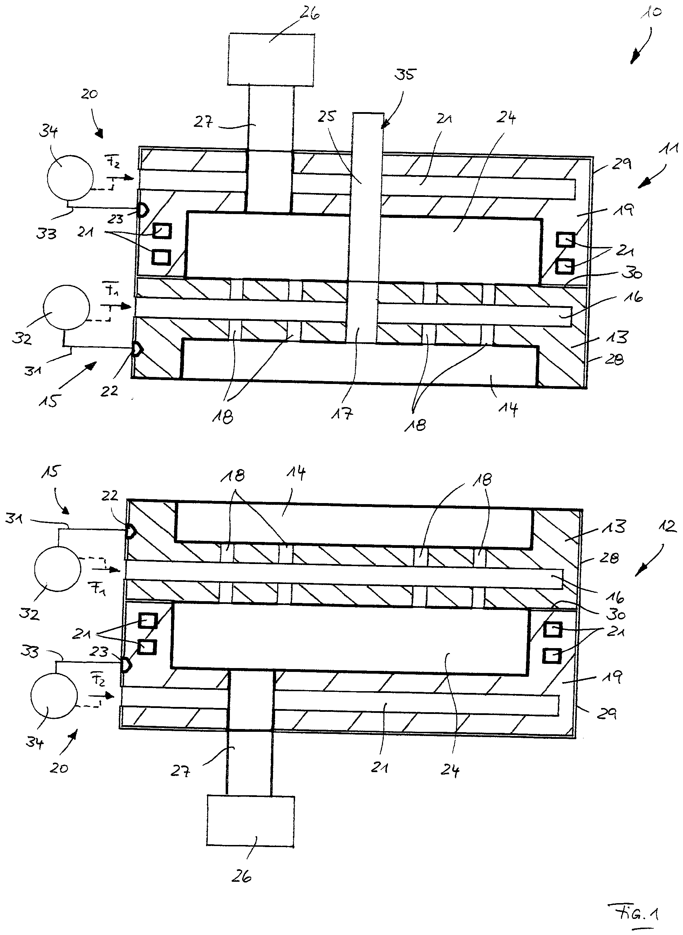

Fig. 1 zeigt eine Vorrichtung 10 zur Herstellung von aus einem Partikelschaum bestehenden Formteilen, die ein oberes 1. Teilwerkzeug 11 und ein unteres 2. Teilwerkzeug 12 besitzt. Das 1. Teilwerkzeug 11 besitzt ein unteres 1. Werkzeugsegment 13, auf dessen Unterseite eine Teilkavität 14 gebildet ist. Dem 1. Werkzeugsegment 13 ist ein 1. Temperiersystem 15 zugeordnet, das einen im 1. Werkzeugsegment ausgebildeten Fluidkanal 16 umfasst, der von einem Temperierfluid, beispielsweise heißem oder kaltem Wasser durchströmt werden kann, wie es durch den Pfeil F₁ angedeutet ist. In dem 1. Werkzeugsegment 13 ist ein 1. Temperatursensor 22 angeordnet, der die Temperatur des 1. Werkzeugsegments 13 erfasst und ein entsprechendes Temperatursignal über eine Leitung 31 an eine 1. Steuerung 32 abgibt, die auf die Zuführung des Temperierfluids Einfluss nehmen kann, wie es gestrichelt dargestellt ist. Mittels des 1. Temperiersystems kann das 1. Werkzeugsegment 13 mit hoher Genauigkeit auf eine gewünschte Temperatur gebracht und auf dieser gehalten werden.

Auf seiner Außenseite ist das 1. Werkzeugsegment 13 mit einer äußeren Wärmeisolierung 28 versehen.

Unter Zwischenschaltung einer wärmeisolierenden Lage 30 ist auf dem 1. Werkzeugsegment 13 ein 2. Werkzeugsegment 19 angeordnet, in dem eine Dampfkammer 24 ausgebildet ist. Die Dampfkammer 24 kann von einem nur schematisch dargestellten Dampferzeuger 26 über einen Dampfzuführkanal 27 mit Heißdampf versorgt werden, der aus der Dampfkammer 24 über mehrere im 1. Werkzeugsegment 13 ausgebildete Dampfkanäle 18 in die Teilkavität 14 eingebracht werden kann. In den Dampfkanälen 18 können Absperrventile oder Steuerventile angeordnet sein (nicht dargestellt).

Dem 2. Werkzeugsegment 19 ist ein 2. Temperiersystem 20 zugeordnet, das mehrere in dem 2. Werkzeugsegment 19 angeordnete Fluidkanäle 21 umfasst, die von einer nicht dargestellten Quelle mit einem Temperierfluid, beispielsweise mit heißem oder kaltem Wasser versorgt werden können, wie es durch den Pfeil F₂ angedeutet ist.

Dem 2. Werkzeugsegment 19 ist ein 2. Temperatursensor 23 zugeordnet, der über eine Leitung 33 mit einer 2. Steuerung 34 in Verbindung steht, die auf die Menge und die Temperatur des zugeführten Temperierfluids einwirken kann, wie es gestrichelt angedeutet ist. Auf diese Weise kann das 2. Werkzeugsegment 19 mit einer hohen Genauigkeit auf eine gewünschte Temperatur gebracht und auf dieser gehalten werden.

Das 2. Werkzeugsegment 19 ist außenseitig mit einer Wärmeisolierung 29 versehen.

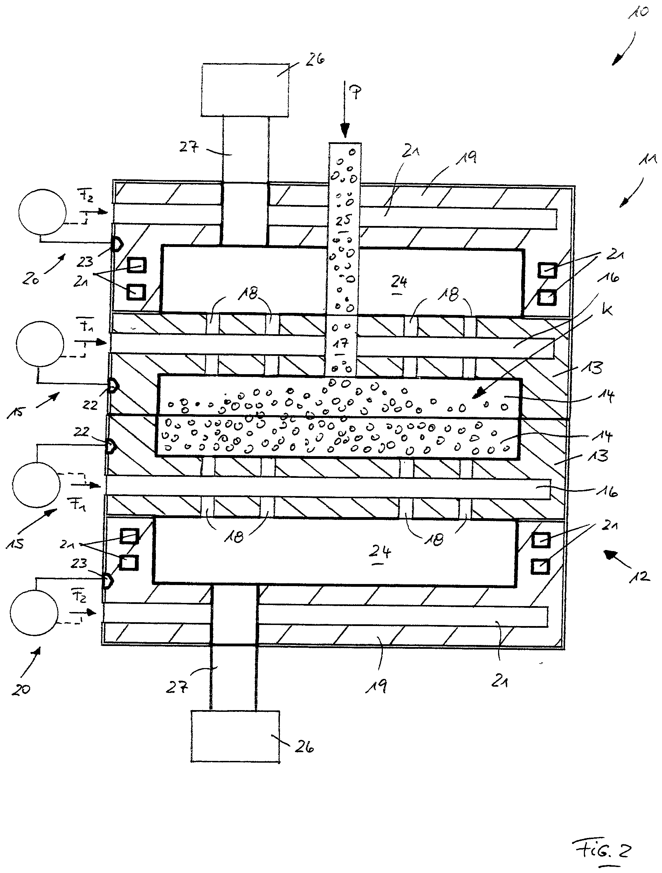

Der bisher beschriebene Aufbau des oberen 1. Teilwerkzeugs 11 findet sich entsprechend auch beim unteren 2. Teilwerkzeug 12, wobei entsprechende Bauteile mit den entsprechenden Bezugszeichen versehen sind. Das 1. Teilwerkzeug 11 und das 2. Teilwerkzeug 12 sind mit ihren Teilkavitäten 14 einander zugewandt und können zusammengefahren werden, wobei die Teilkavitäten 14 ist geschlossenem Zustand eine Formteilkavität K bilden (s. Fig. 2).

Das obere 1. Werkzeugsegment 11 unterscheidet sich vom unteren 2. Werkzeugsegment 12 im dargestellten Ausführungsbeispiel dadurch, dass zusätzlich ein Zuführkanal 35 für Kunststoff-Partikel vorgesehen ist. Der Zuführkanal 35 umfasst einen im 1. Werkzeugsegment 13 ausgebildeten 1. Zufuhrkanal-Abschnitt 17, der in der Teilkavität 14 mündet und an seinem der Teilkavität 14 abgewandten Ende in einen 2. Zuführungskanal-Abschnitt 25 übergeht, der im 2. Werkzeugsegment 19 ausgebildet ist.

Anhand der Fig. 2 bis 4 soll ein Produktionszyklus zur Herstellung eines aus einem Partikelschaum bestehenden Formteils erläutert werden. Zunächst werden die beiden Teilwerkzeuge 11 und 12 aus dem in Fig. 1 dargestellten auseinander gefahrenen Zustand zusammengefahren, wobei die beiden Teilkavitäten 14 die Formteilkavität K bilden. Die beiden 2. Werkzeugsegmente 19 der beiden Teilwerkzeuge 11 und 12 werden über das jeweilige 2. Temperiersystem 20 auf einer vorbestimmten Temperatur gehalten, so dass die Temperatur der Wandung der Dampfkammer 24 um maximal 5°C unterhalb der Temperatur des Heißdampfes liegt und vorzugsweise zumindest der Temperatur des Heißdampfes entspricht und besonders bevorzugt um zumindest 3°C und insbesondere um etwa 3°C bis 5°C über der Temperatur des verwendeten Heißdampfes liegt. Hierdurch wird die Kondensation des Heißdampfes beim Eintreten in die Dampfkammer 24 vermieden.

Zunächst werden die beiden 1. Werkzeugsegmente 13 der beiden Teilwerkzeuge 11 und 12 mittels der jeweiligen 1. Temperiersysteme 15 auf eine Temperatur erwärmt, die entweder der Temperatur des Heißdampfes entspricht oder geringfügig oberhalb von dieser liegt, wie es durch den Pfeil P in Fig. 2 angedeutet ist..

Wenn die beiden 1. Werkzeugsegmente 13 und damit die Wandung der Formteilkavität 14 das Temperaturniveau des Heißdampfes erreicht hat, werden die Kunststoff-Partikel durch den Zuführkanal 25 in die Formteilkavität K eingefüllt.

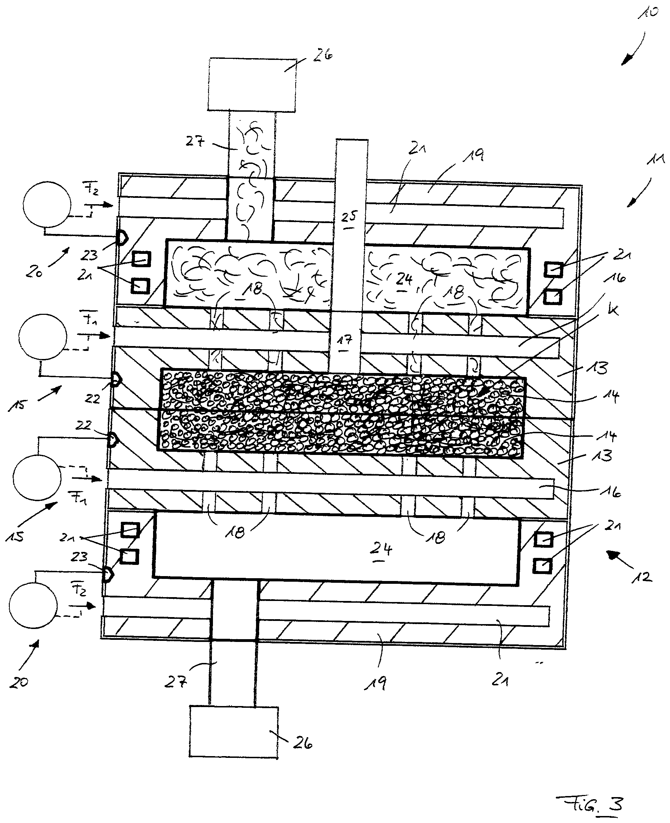

Nach vollständiger Füllung der Formteilkavität K wird der Heißdampf aus den Dampferzeugern 26 durch den jeweiligen Dampfzuführkanal 27 in die Dampfkammern 24 eingebracht und durch die Dampfkanäle 18 in die Formteilkavität K eingeleitet, wie es in Fig. 3 dargestellt ist. Durch die temperierten Werkzeugsegmente kann der Heißdampf dabei ohne zu Kondensieren in die Formteilkavität K gelangen und dort die Kunststoff-Partikel verschweißen oder versintern.

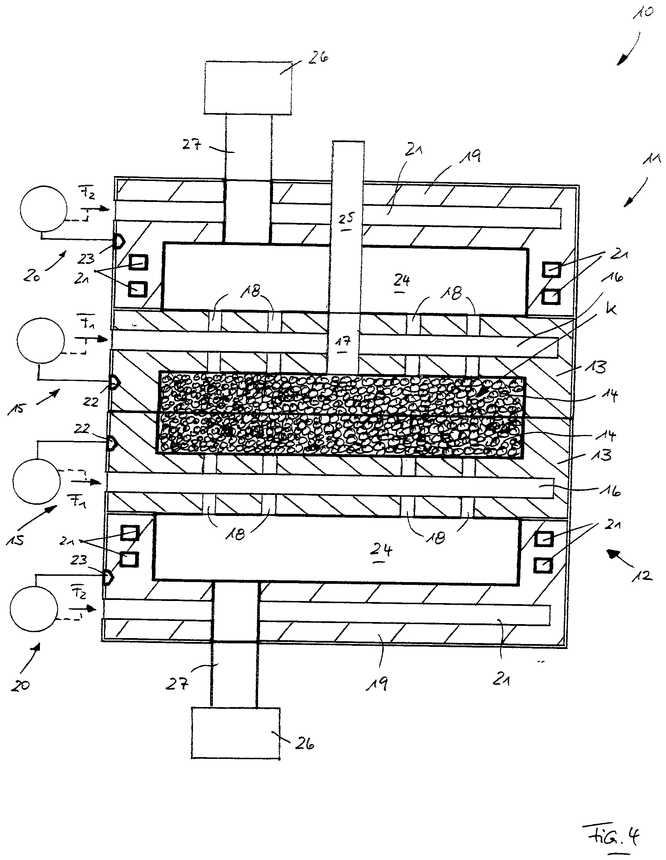

Nach erfolgter Verschweißung oder Versinterung der Kunststoff-Partikel in der Formteilkavität K wird die Zuführung des Heißdampfes abgestellt (s. Fig. 4) und die beiden 1. Werkzeugsegmente 13 der beiden Teilwerkzeuge 11 und 12 werden durch das jeweilige 1. Temperiersystem 15 auf eine Entformungstemperatur von beispielsweise 80°C abgekühlt (s. Fig. 4). Nach Erreichen der Entformungstemperatur öffnet die Vorrichtung 10 und das stabilisierte Formteil kann entnommen werden. Es ist somit wieder der in Fig. 1 dargestellte Zustand erreicht, von dem aus der vorgenannte Zyklus nochmals abläuft.

## Patentansprüche

1. Vorrichtung (10) zur Herstellung von aus einem Partikelschaum bestehenden Formteilen, mit mehreren Teilwerkzeugen (11, 12), die jeweils eine Teilkavität (14) aufweisen, wobei die Teilkavitäten (14) im Zusammenwirken eine Formteilkavität (K) bilden, wobei zumindest eines der Teilwerkzeuge (11, 12) einen Zuführkanal (35), durch den Kunststoff-Partikel in die Formteilkavität (K) einbringbar sind, und eine Dampfkammer (24) aufweist, aus der ein Heißdampf durch zumindest einen Dampfkanal (18) in die Formteilkavität (K) einbringbar ist, wobei zumindest eines der Teilwerkzeuge (11, 12) ein die Teilkavität (14) aufweisendes 1. Werkzeugsegment (13) und ein die Dampfkammer (24) aufweisendes 2. Werkzeugsegment (19) umfasst, wobei das 1. Werkzeugsegment (13) ein 1. Temperiersystem (15) besitzt, mittels dessen das 1. Werkzeugsegment (13) auf eine vorbestimmte Temperatur erwärmbar und/oder kühlbar ist, **dadurch gekennzeichnet, dass** das 2. Werkzeugsegment (19) ein 2. Temperiersystem (20) besitzt, mittels dessen das 2. Werkzeugsegment (19) auf eine vorbestimmte Temperatur erwärmbar und/oder kühlbar ist.

2. Vorrichtung nach Anspruch 1, **dadurch gekennzeichnet, dass** zumindest zwei Teilwerkzeuge (11, 12) vorgesehen sind, die jeweils das 1. Werkzeugsegment (13) und das 2. Werkzeugsegment (19) aufweisen.

3. Vorrichtung nach Anspruch 1 oder 2, **dadurch gekennzeichnet, dass** das 1. Werkzeugsegment (13) und das 2. Werkzeugsegment (19) durch eine wärmeisolierende Lage (30) voneinander getrennt und/oder auf Abstand angeordnet sind.

4. Vorrichtung nach einem der Ansprüche 1 bis 3, **dadurch gekennzeichnet, dass** das 1. Temperiersystem (15) des 1. Werkzeugsegments (13) zumindest einen in dem 1. Werkzeugsegment (13) ausgebildeten Fluidkanal (16) aufweist, der von einem Temperierfluid durchströmbar ist.

5. Vorrichtung nach einem der Ansprüche 1 bis 4, **dadurch gekennzeichnet, dass** das 1. Temperiersystem (15) zumindest einen 1. Temperatursensor (22) aufweist, der mit einer 1. Temperatursteuerung (32) verbunden ist.

6. Vorrichtung nach einem der Ansprüche 1 bis 5, **dadurch gekennzeichnet, dass** das 2. Temperiersystem (20) des 2. Werkzeugsegments (19) zumindest einen in dem 2. Werkzeugsegment (19) ausgebildeten Fluidkanal (21) aufweist, der von einem Temperierfluid durchströmbar ist.

7. Vorrichtung nach einem der Ansprüche 1 bis 6, **dadurch gekennzeichnet, dass** das 2. Temperiersystem (20) zumindest einen 2. Temperatursensor (23) aufweist, der mit einer 2. Temperatursteuerung (34) verbunden ist.

8. Vorrichtung nach einem der Ansprüche 1 bis 7, **dadurch gekennzeichnet, dass** der Zuführkanal (35) für die Kunststoff-Partikel zumindest einen im 1. Werkzeugsegment (13) ausgebildeten 1. Zuführkanal-Abschnitt (17) und zumindest einen im 2. Werkzeugsegment (19) ausgebildeten 2. Zuführkanal-Abschnitt (25) aufweist.

9. Verfahren zur Herstellung von aus einem Partikelschaum bestehenden Formteilen mit einer Vorrichtung nach einem der Ansprüche 1 bis 8, wobei die Kunststoff-Partikel (P) in die Formteilkavität (K) eingebracht werden und dort unter Zuführung von Heißdampf aufgeschäumt und/oder versintert werden, **dadurch gekennzeichnet, dass** das 2. Werkzeugsegment (19) mittels des 2. Temperiersystems (20) auf einer Temperatur gehalten wird, die zumindest der Temperatur des Heißdampfes entspricht, dass das 1. Werkzeugsegment (13) vor oder während der Zuführung des Heißdampfes mittels des 1. Temperiersystems (15) auf eine Temperatur gebracht wird, die zumindest der Temperatur des Heißdampfes entspricht, und dass das 1. Werkzeugsegment (13) nach dem Aufschäumen und/oder der Versinterung der Kunststoff-Partikel in der Formteilkavität (K) mittels des 1. Temperiersystems (15) auf eine Entformungstemperatur abgekühlt wird.

10. Verfahren nach Anspruch 9, **dadurch gekennzeichnet, dass** das 2. Werkzeugsegment (19) mittels des 2. Temperiersystems (20) auf einer Temperatur gehalten wird, die um zumindest 3°C oberhalb der Temperatur des Heißdampfes liegt.

## Claims

1. Device (10) for producing molded parts consisting of a particle foam, with a plurality of sub-molds (11, 12), which have a sub-cavity (14) each, wherein the sub-cavities (14) form a molding cavity (K) by interacting, wherein at least one of the sub-molds (11, 12) has a feed channel (35), through which plastic particles can be introduced into the molding cavity (K), and a steam chamber (24), from which a superheated steam can be introduced into the molding cavity (K) through at least one steam channel (18), wherein at least one of the sub-molds (11, 12) comprises a first mold segment (13) having the sub-cavity (14) and a second mold segment (19) having the steam chamber (24), wherein the first mold segment (13) has a first temperature control system (15), by means of which the first mold segment (13) can be heated and/or cooled to a predetermined temperature, **characterized in that** the second mold segment (19) has a second temperature control system (20), by means of which the second mold segment (19) can be heated and/or cooled to a predetermined temperature.

2. Device in accordance with claim 1, **characterized in that** at least two sub-molds (11, 12) are provided, which have each the first mold segment (13) and the second mold segment (19).

3. Device in accordance with claim 1 or 2, **characterized in that** the first mold segment (13) and the second mold segment (19) are separated and/or maintained at spaced locations from one another by a heat-insulating layer.

4. Device in accordance with one of the claims 1 through 3, **characterized in that** the first temperature control system (15) of the first mold segment (13) has at least one fluid channel (16), which is formed in the first mold segment (13) and through which a temperature control fluid can flow.

5. Device in accordance with one of the claims 1 through 4, **characterized in that** the first temperature control system (15) has at least one first temperature sensor (22), which is connected to a first temperature control device (32).

6. Device in accordance with one of the claims 1 through 5, **characterized in that** the second temperature control system (20) of the second mold segment (19) has at least one fluid channel (21), which is formed in the second mold segment (19) and through which a temperature control fluid can flow.

7. Device in accordance with one of the claims 1 through 6, **characterized in that** the second temperature control system (20) has at least one second temperature sensor (23), which is connected to a second temperature control device (34).

8. Device in accordance with one of the claims 1 through 7, **characterized in that** the feed channel (35) for the plastic particles has at least one first feed channel section (17) formed in the first mold segment (13) and at least one second feed channel section (25) formed in the second mold segment (19).

9. Process for producing molded parts consisting of a particle foam with a device in accordance with one of the claims 1 through 8, wherein the plastic particles (P) are introduced into the molding cavity (K) and are formed and/or sintered there by feeding superheated steam, **characterized in that** the second mold segment (19) is maintained by means of the second temperature control system (20) at a temperature that corresponds at least to the temperature of the superheated steam; that the first mold segment (13) is brought before or during the feeding of the superheated steam by means of the first temperature control system (15) to a temperature that corresponds at least to the temperature of the superheated steam, and that the first mold segment (13) is cooled to a mold release temperature by means of the first temperature control system (15) after the foaming and/or the sintering of the plastic particles in the molding cavity (K).

10. Process in accordance with claim 9, **characterized in that** the second mold segment (19) is maintained by means of the second temperature control system (20) at a temperature that is above the temperature of the superheated steam by at least 3°C.

## Revendications

1. Dispositif (10) pour la fabrication de pièces moulées constituées de mousse particulaire, avec plusieurs outils partiels (11, 12) comportant respectivement une cavité partielle (14), les cavités partielles (14) formant en interaction une cavité de pièce moulée (K), au moins un des outils partiels (11, 12) comportant un canal d'alimentation (35) à travers lequel les particules de matière plastique peuvent être introduites dans la cavité de pièce moulée (K) et une chambre à vapeur (24) hors de laquelle de la vapeur chaude peut être introduite dans la cavité de pièce moulée (K) à travers au moins un canal de vapeur (18), au moins un des outils partiels (11, 12) comprenant un 1^{er} segment d'outil (13) comportant la cavité partielle (14) et un 2^{e} segment d'outil (19) comprenant la chambre à vapeur (24), le 1^{er} segment d'outil (13) possédant un 1^{er} système d'équilibrage de température (15) à l'aide duquel le 1^{er} segment d'outil (13) peut être réchauffé et/ou refroidi à une température prédéfinie, **caractérisé en ce que** le 2^{e} segment d'outil (19) possède un 2^{e} système d'équilibrage de température (20) à l'aide duquel le 2^{e} segment d'outil (19) peut être réchauffé et/ou refroidi à une température prédéfinie.

2. Dispositif selon la revendication 1, **caractérisé en ce qu'**au moins deux outils partiels (11, 12) sont prévus, ces outils comportant respectivement le 1^{er} segment d'outil (13) et le 2^{e} segment d'outil (19).

3. Dispositif selon la revendication 1 ou 2, **caractérisé en ce que** le 1^{er} segment d'outil (13) et le 2^{e} segment d'outil (19) sont disposés de façon séparée et/ou à une certaine distance l'un de l'autre par le biais d'une couche thermo-isolante (30).

4. Dispositif selon l'une quelconque des revendications 1 à 3, **caractérisé en ce que** le 1^{er} système d'équilibrage de température (15) du 1^{er} segment d'outil (13) comporte au moins un canal de fluide (16) réalisé dans le 1^{er} segment d'outil (13), ce canal étant traversé par un fluide d'équilibrage de température.

5. Dispositif selon l'une quelconque des revendications 1 à 4, **caractérisé en ce que** le 1^{er} système d'équilibrage de température (15) comporte au moins un 1^{er} capteur de température (22) relié à un 1^{er} élément de commande de température (32).

6. Dispositif selon l'une quelconque des revendications 1 à 5, **caractérisé en ce que** le 2^{e} système d'équilibrage de température (20) du 2^{e} segment d'outil (19) comporte au moins un canal de fluide (21) réalisé dans le 2^{e} segment d'outil (19), ce canal étant traversé par un fluide d'équilibrage de température.

7. Dispositif selon l'une quelconque des revendications 1 à 6, **caractérisé en ce que** le 2^{e} système d'équilibrage de température (20) comporte au moins un 2^{e} capteur de température (23) relié à un 2^{e} élément de commande de température (34).

8. Dispositif selon l'une quelconque des revendications 1 à 7, **caractérisé en ce que** le canal d'alimentation (35) en particules de matière plastique comporte au moins une 1^{ère} section de canal d'alimentation (17) réalisée dans le 1^{er} segment d'outil (13) et au moins une 2^{e} section de canal d'alimentation (25) réalisée dans le 2^{e} segment d'outil (19).

9. Procédé de fabrication de pièces moulées constituées d'une mousse particulaire à l'aide d'un dispositif selon l'une quelconque des revendications 1 à 8, les particules de matière plastique (P) étant introduites dans la cavité de pièce moulée (K) et y étant amenées à l'état mousseux et/ou frittées par amenée de vapeur chaude, **caractérisé en ce que** le 2^{e} segment d'outil (19) est maintenu, à l'aide du 2^{e} système d'équilibrage de température (20), à une température correspondant au moins à la température de la vapeur chaude, que le 1^{er} segment d'outil (13) est amené, avant ou pendant l'amenée de valeur chaude, à une température à l'aide du 1^{er} système d'équilibrage de température (15), ladite température correspondant au moins à la température de la vapeur chaude et que le 1^{er} segment d'outil (13) est refroidi à une température de démoulage après le moussage et/ou le frittage des particules de matière plastique dans la cavité de pièce moulée (K) à l'aide du 1^{er} système d'équilibrage de température (15).

10. Procédé selon la revendication 9, **caractérisé en ce que** le 2^{e} segment d'outil (19) est maintenu à l'aide du 2^{e} système d'équilibrage de température (20) à une température située au moins 3°C au-dessus de la température de la vapeur chaude.
